(19) Europäisches Patentamt
European Patent Office
Office européen des brevets

(11) Publication number: 0 208 790 A1

(12) # EUROPEAN PATENT APPLICATION

published in accordance with Art. 158(3) EPC

(21) Application number: 86900840.9

(22) Date of filing: 17.01.86

Data of the international application taken as a basis:

(86) International application number: PCT/JP 86/00017

(87) International publication number: WO 86/04337 (31.07.86 86/17)

(51) Int. Cl.⁴: C 08 F 2/18, C 08 F 212/04, C 08 L 33/14, C 08 L 35/06, C 08 L 51/04

(30) Priority: 17.01.85 JP 4907/85
28.01.85 JP 12705/85

(43) Date of publication of application: 21.01.87 Bulletin 87/4

(84) Designated Contracting States: DE FR GB IT NL

(71) Applicant: MITSUBISHI RAYON CO. LTD., 3-19, Kyobashi 2-chome Chuo-Ku, Tokyo 104 (JP)

(72) Inventor: KIMURA, Atushi, 2-1, Kurokawa 3-chome, Ohtake-shi Hiroshima 739-06 (JP)
Inventor: TOYOOKA, Yutaka, 2-5-205, Kurokawa 3-chome, Ohtake-shi Hiroshima 739-06 (JP)
Inventor: KISHIDA, Kazuo, 74-404, Ohnocho, Saiki-gun Hiroshima 739-04 (JP)

(74) Representative: Patentanwälte TER MEER - MÜLLER - STEINMEISTER, Mauerkircherstrasse 45, D-8000 München 80 (DE)

(54) **PROCESS FOR PRODUCING MALEIMIDE COPOLYMER, AND THERMOPLASTIC RESIN PREPARED BY USING SAID COPOLYMER.**

(57) A process for producing maleimide copolymer, which comprises conducting suspension polymerization of a maleimide monomer and at least one monomer selected from the group consisting of an aromatic vinyl monomer, vinyl cyanide monomer, and methyl methacrylate monomer by using a calcium phosphate dispersing agent as a suspending and dispersing agent and dissolving a phosphate nonionic surfactant in the monomers. This process serves to stabilize the polymerization system and minimize adhesion of resulting polymer to the inside wall of a polymerization tank. A thermoplastic resin composition is also disclosed, which is prepared by blending the above-described maleimide copolymer with a specific rubber-modified graft copolymer. This resin composition has excellent heat stability upon high-temperature molding and resistance to coloration, heat and impact.

EP 0 208 790 A1

SPECIFICATION

# PROCESS FOR THE PREPARATION OF MALEIMIDE COPOLYMERS AND THERMOPLASTIC RESIN COMPOSITION USING SUCH COPOLYMERS

## Technical Field

This invention relates to a suspension polymerization process for the preparation of maleimide copolymers having excellent thermal resistance and thermal stability, which process brings about excellent polymerization stability and causes almost no polymer to adhere to the walls of the polymerization vessel, as well as to a thermoplastic resin composition using maleimide copolymers prepared by this process.

## Prior Art

In recent years, the demand for improved thermal resistance of materials for automobile parts has increased. Especially for the manufacture of internal trim parts such as dash board panels and the like, a material having high thermal resistance and good moldability is in urgent demand.

It is well known that maleimide polymers and copolymers are materials having excellent thermal resistance. However, since these polymers are very poor

in impact strength and moldability, they are usually blended with a rubber moldified polymer such as an ABS resin, AES resin and AAS resin in order to overcome such shortcomings. Nevertheless, even in maleimide resin compositions whose impact strength and moldability are improved by this means, there is still much room for improvement in impact strength and moldability when compared with common ABS resin, AES resin and AAS resin. In particular, an improvement in moldability is strongly desired. More specifically, in the field of current automotive industry, large-sized molding machines are in common use for molding and the material tends to stay at high temperature for a long period of time. Thus, it is desirable to develop a heat-resisting resin having excellent thermal stability and good moldability.

In synthesizing a copolymer containing a maleimide monomer as a constituent in order to improve its thermal resistance, it has been common practice to employ the emulsion polymerization or suspension polymerization technique. However, where a maleimide copolymer is synthesized according to the emulsion polymerization technique, the emulsifier used in the emulsion polymerization step remains in the resulting maleimide copolymer. Accordingly, it is known that, when the copolymer thus obtained is blended with ABS resin, AES resin or AAS resin, the residual emulsifier

undergoes thermal decomposition during high-temperature molding at 280°C or above, developing so-called silver streaks on the surfaces of molded articles or causing thermal discoloration.

On the other hand, where a maleimide copolymer is synthesized according to the suspension polymerization technique, the copolymer obtained by using a maleimide monomer has a high glass transition temperature (Tg) and, therefore, the polymerization must be carried out at a high temperature in order to enhance the polymer yield. However, the system in which a hydrophilic high-molecular compound such as polyvinyl alcohol, a partial saponification product of polymethyl methacrylate or polyacrylamide is used as the suspension dispersant during polymerization at a high temperature has the disadvantage that the thermal resistance of the dispersant itself is inadequate and, therefore, the dispersion stability is low. As a result, the suspension polymerization system is so unstable that it may consolidate into a mass or, if not, the resulting beads may not be uniform in diameter and a large amount of polymer may adhere to the walls of the polymerization vessel. Moreover, even if the suspension polymerization using a hydrophilic high-molecular compound is completed satisfactorily, the hydrophilic high-molecular compound thermally decomposes during high-temperature molding.

For these reasons, it is disadvantageous to use such a hydrophilic high-molecular compound as the suspension dispersant in the synthesis of a maleimide copolymer.

Accordingly, in the case of suspension polymerization, calcium phosphate compounds, calcium carbonate compounds, kaolin, talc and the like have been commonly used as dispersants. Moreover, where calcium phosphate compounds are used as dispersants, fatty acid soaps such as sodium oleate and sodium stearate, anionic surface-active agents such as sodium dodecylsulfonate and sodium dodecylbenzenesulfonate, and nonionic surface-active agents such as polyoxyethylene monostearyl ester and polyoxyethylene monooleyl ester, have been commonly used as dispersing agents. However, the use of this kind of emulsifier has been found to pose a problem in that a considerable amount of polymer adheres to the inner walls of the polymerization vessel and causes a reduction in workability and productivity.

In view of these circumstances, the present inventors conducted intensive studies and have found that, in a suspension polymerization process for the preparation of maleimide copolymers, all of the above-described disadvantages can be overcome by carrying out the suspension polymerization while using a calcium phosphate dispersant as the suspension dispersant and

while allowing a specific amount of a phosphoric ester type nonionic surface-active agent to be dissolved in the monomers. Moreover, they also found that a resin composition having excellent thermal resistance, thermal stability and impact resistance can be obtained by blending a maleimide copolymer prepared by this suspension polymerization process with a specific graft copolymer. The present invention was completed on the basis of these discoveries.

Disclosure of the Invention

It is an object of the present invention to provide a suspension polymerization process for the preparation of maleimide copolymers which process brings about excellent polymerization stability and causes almost no polymer to adhere to the walls of the polymerization vessel.

It is another object of the present invention to provide a thermoplastic resin composition formed by blending a maleimide copolymer prepared by this process with a specific graft copolymer and characterized by excellent thermal resistance, thermal stability and impact resistance.

According to the present invention, there is provided a process for the preparation of maleimide copolymers by suspension polymerization of 50 to 95% by

weight of at least one monomer selected from the group consisting of aromatic vinyl monomers, vinyl cyanide monomers and methyl methacrylate monomer, 5 to 50% by weight of a maleimide monomer, and 0 to 30% by weight of a monomer copolymerizable therewith, provided that the total amount of said monomers is 100% by weight, said process being characterized by carrying out said suspension polymerization while using a calcium phosphate dispersant as the suspension dispersant and while allowing a phosphoric ester type nonionic surface-active agent of the general formula

$$[RO(CH_2CH_2O)_n]_m\underset{\displaystyle \overset{\|}{O}}{P}(OA)_{3-m} \qquad (I)$$

where R is an alkyl or aralkyl group of 8 to 30 carbon atoms, A is a hydrogen atom or a metal capable of forming a water-soluble salt, m is an integer of 1 to 3, and n is an integer of 5 to 50, to be dissolved in said monomers in an amount of 0.0001 to 0.5 part by weight per 100 parts by weight of the mixture of said monomers.

According to the present invention, there is also provided a thermoplastic resin composition comprising

[A] 40 to 90% by weight of a maleimide copolymer

prepared from 50 to 95% by weight of at least one monomer selected from the group consisting of aromatic vinyl monomers, vinyl cyanide monomers and methyl methacrylate monomer, 5 to 50% by weight of a maleimide monomer, and 0 to 30% by weight of a monomer copolymerizable therewith, provided that the total amount of said monomers is 100% by weight, said copolymer having been obtained by subjecting said monomers to suspension polymerization while using a calcium phosphate dispersant as the suspension dispersant and while allowing a phosphoric ester type nonionic surface-active agent of the general formula

$$[RO(CH_2CH_2O)_n]_m\underset{\underset{O}{\|}}{P}(OA)_{3-m} \qquad (I)$$

where R is an alkyl or aralkyl group of 8 to 30 carbon atoms, A is a hydrogen atom or a metal capable of forming a water-soluble salt, m is an integer of 1 to 3, and n is an integer of 5 to 50, to be dissolved in said monomers in an amount of 0.0001 to 0.5 part by weight per 100 parts by weight of the mixture of said monomers; and

[B] 10 to 60% by weight of a graft copolymer formed by subjecting at least one monomer selected from

the group consisting of aromatic vinyl monomers, vinyl cyanide monomers and methyl methacrylate monomer to graft polymerization on a rubber polymer;

the total amount of said copolymers [A] and [B] being 100% by weight.

Best Mode for Carrying Out the Invention

The aromatic vinyl monomers which can be used as starting materials in the polymerization reaction for preparing a maleimide copolymer include, for example, styrene, α-methylstyrene, p-methylstyrene, tert-butylstyrene, chlorostyrene, bromostyrene and the like. The vinyl cyanide monomers which can be used for the same purpose include, for example, acrylonitrile, methacrylonitrile and the like. Aromatic vinyl monomers, vinyl cyanide monomers and methyl methacrylate monomer may be used alone or in combination, and the total amount of such monomers may be 50 to 95% by weight. If the total amount is less than 50% by weight, the resulting copolymer will have high melt viscosity and tend to be inconvenient for molding purposes. If the total amount is greater than 95% by weight, an improvement in thermal resistance will tend to be almost impossible to achieve.

The maleimide monomers which can be used

with the aforesaid monomers include, for example, maleimide, N-methylmaleimide, N-ethylmaleimide, N-phenylmaleimide, N-halophenylmaleimides, N-alkylphenylmaleimides, N-cyclohexylmaleimide and the like. These maleimide monomers may be used alone or in an admixture of two or more, and the amount of maleimide monomer used may be 5 to 50% by weight.

The monomers which are copolymerizable with aromatic vinyl monomers, vinyl cyanide monomers, methyl methacrylate and maleimide monomers include, for example, vinyl acetate, fumaronitrile, isopropyl fumarate, acenaphthylene and the like. These copolymerizable monomers are optional components, and need not necessarily be used as starting materials in the practice of the present invention. They may be used in an amount of 0 to 30% by weight.

In the present invention, the suspension polymerization is carried out by using a calcium phosphate compound as the suspension dispersant. Specific examples of useful calcium phosphate dispersants include calcium tertiary phosphate, calcium secondary phosphate, calcium hydrogen phosphate, hydroxyapatite and the like. These calcium phosphate dispersants may be used alone or in an admixture of two or more. The amount of calcium phosphate dispersant added may usually be 0.1 to 3 parts by weight, preferably 0.3 to 2 parts

by weight, per 100 parts by weight of the mixture of the aforesaid monomers. If the amount is less than 0.1 part by weight, it may be difficult to establish a stable suspension system, while if it is greater than 3 parts by weight, the dispersant will be incorporated into the polymer and cause deterioration of its quality.

Also in the present invention, a phosphoric ester type nonionic surface-active agent of the aforesaid formula (I) is used as a dispersing agent. As a result of investigation into a variety of surface-active agents, the present inventors have found that such a phosphoric ester type nonionic surface-active agent can act not only as a suspension dispersing agent in the preparation of a maleimide copolymer by suspension polymerization, but also as a thermal stabilizer in molding the maleimide copolymer at high temperature. This is the reason why such a surface-active agent is used in the suspension polymerization reaction of the present invention.

In the above formula (I) representing the structure of a phosphoric ester type nonionic surface-active agent, R represents an alkyl or aralkyl group of 8 to 30 carbon atoms. Specific examples of the alkyl group of 8 to 30 carbon atoms include lauryl, stearyl and the like, and specific examples of the

aralkyl group of 8 to 30 carbon atoms include nonylphenyl and the like. On the other hand, A may represent a metal capable of forming a water-soluble salt and specific examples of the metal include sodium, potassium and the like.

Specific examples of this phosphoric ester type nonionic surface-active agent include Gafac GB520, Gafac RS610, Gafac RS710, Gafac RE410, Gafac RE610 and Gafac RE960, all of which are commercial products of Toho Chemicals Co., Ltd.

These surface-active agents may be used alone or in an admixture of two or more, and they may also be used in combination of other anionic surface-active agents. Prior to the suspension polymerization, the phosphoric ester type nonionic surface-active agent may usually be dissolved in the aforesaid monomers in an amount of 0.0001 to 0.5 part by weight, preferably 0.001 to 0.1 part by weight, per 100 parts by weight of the mixture of the aforesaid monomers. If the amount is less than 0.0001 part by weight, the surface-active agent may fail to be satisfactorily effective in preventing the polymer from adhering to the walls of the polymerization vessel, and if it is greater than 0.5 part by weight, the surface-active agent will exert an adverse effect on the stability of the suspension polymerization and cause the system

to consolidate into a mass.

Using the aforesaid monomers as starting materials, the suspension polymerization reaction for the preparation of a maleimide copolymer in accordance with the present invention may be carried out, for example, in the following manner: The aforesaid monomers, dispersant and surface-active agent are charged into a reactor and an sufficient amount of a radical polymerization initiator is added thereto. This mixture is usually heated at a temperature of 50 to 130°C for 2 to 8 hours to effect the polymerization reaction. After completion of the reaction, the resulting bead polymer is dehydrated, washed and then dried to obtain the desired maleimide copolymer [A]. This copolymer [A] has the properties of high thermal resistance and undergoing little discoloration or thermal decomposition during high-temperature molding.

On the other hand, the graft copolymer [B] used in the present invention is a polymer obtained by subjecting at least one monomer selected from the group consisting of aromatic vinyl monomers, vinyl cyanid monomers and methyl methacrylate to graft polymerization on a rubber polymer.

The rubber polymers which can be used for this purpose include, for example, diene rubbers

composed mainly of a diene monomer (such as polybutadiene, polyisoprene and butadiene-styrene copolymer), acrylic rubbers composed mainly of an acrylic ester (such as acrylic rubber composed mainly of butyl acrylate) and ethylene-propylene-diene (EPDM) rubber, but are not limited thereto. These rubber polymers may be used alone or in an admixture of two or more.

Useful aromatic vinyl monomers include, for example, styrene, α-methylstyrene, p-methylstyrene, tert-butylstyrene, chlorostyrene, bromostyrene and the like. They may be used alone or in an admixture of two or more.

Useful vinyl cyanide monomers include, for example, acrylonitrile, methacrylonitrile and the like. They may be used alone or in an admixture of two or more.

In the formation of the graft copolymer, the rubber polymer may be used in an amount of 20 to 70 parts by weight, while the aromatic vinyl monomer(s), vinyl cyanid monomer(s) and/or methyl methacrylate monomer may be used in the total amount of 80 to 30 parts by weight. If the amount of rubber polymer used is less than 20 parts by weight, an adequate degree of impact resistance may not be exhibited. In such a case, a larger amount of graft copolymer [B] must be blended with copolymer [A], which tends to cause a

reduction in thermal resistance. If the amount of rubber polymer used is greater than 70 parts by weight, it will be difficult to obtain a copolymer having a high degree of impact resistance.

The thermoplastic resin composition of the present invention comprises 40 to 90% by weight of the aforesaid maleimide copolymer [A] and 10 to 60% by weight of the aforesaid graft copolymer [B], provided that the total amount of both copolymers is 100% by weight. If the proportions of both copolymers are outside the above-described range, it will be difficult to obtain a thermoplastic resin composition having excellent thermal resistance, thermal stability and impact resistance. Moreover, the molded articles obtained by using this resin composition will have low gloss and, in addition, will tend to develop silver streaks and hence have a poor surface appearance.

The thermoplastic resin composition of the present invention can be formed, for example, by mixing dried powders of the aforesaid copolymers [A] and [B] in a Henschel mixer, kneading the mixture in a vented extruder, Banbury mixer, roll mill or the like, and then pelletizing it. Thus, there is obtained a thermoplastic resin composition characterized by excellent thermal resistance, low thermal decomposability, little deterioration by discoloration during molding, excellent

impact resistance and good flowability.

The present invention is further illustrated by the following examples. In these examples, all parts are by weight.

In these examples, the thermal decomposability and thermal discoloration of a maleimide copolymer alone were evaluated according to the following procedures.

Procedure for the evaluation of thermal decomposability

Using a thermogravimetric analysis (Model TGA-30; manufactured by Shimadzu Corporation), a polymer sample was heated at a rate of 10°C/min in an atmosphere of 30 ml/min of nitrogen gas and its weight loss was measured. The temperature at which the polymer sample lost 5% by weight of its original weight was taken as a measure of thermal decomposability.

Procedure for the evaluation of thermal discoloration

Using a 1-ounce vertical injection molding machine, the copolymer was molded under the following conditions.

| | |
|---|---|
| Mold configuration: | Flat plate having a size of $50 \times 80 \times 3^t$ mm |
| Mold temperature: | 60°C |
| Cylinder temperature: | 280°C (preset) |

Injection speed: 10 seconds

Molding cycle: 60 seconds

The thermal discoloration of the molded plate was evaluated according to the following criteria.

Thermal discoloration:

○ No appreciable change was noted by visual inspection.

Δ A slight degree of discoloration was noted by visual inspection.

X A marked degree of discoloration was noted by visual inspection.

The thermal decomposability and thermal discoloration of a resin composition comprising a maleimide copolymer and a graft copolymer were evaluated according to the following procedures.

<u>Procedures for the evaluation of thermal decomposability and thermal discoloration</u>

Using a 1-ounce vertical injection molding machine, the resin composition was molded under the following conditions.

Mold configuration: Flat plate having a size of $50 \times 80 \times 3^t$ mm

Mold temperature: 60°C

Cylinder temperature: 290°C (for the evaluation of thermal decomposability)

| | |
|---|---|
| | 280°C (for the evaluation of thermal discoloration) |
| Injection speed: | 10 seconds |
| Molding cycle: | 60 seconds |

The surface appearance of the plate molded at a cylinder temperature of 290°C was examined for the development of silver streaks owing to thermal decomposition. On the basis of the number of silver streaks, the thermal decomposability of the resin composition was evaluated according to the following criteria.

Thermal decomposability:

○ No silver streaks were observed.

Δ Some silver streaks were observed.

X A large number of silver streaks were observed.

XX An immense number of silver streaks were observed.

Thermal discoloration:

The degree of yellowness (YI value according to JIS K-7103) of the plate molded at a cylinder temperature of 280°C was measured by means of a color computer (manufactured by Suga Testing Machine Co., Ltd.).

Example 1

Preparation of maleimide copolymer [A]

The following materials were charged into a 3-liter autoclave (made of SUS #32):

Monomer phase:

| | | |
|---|---|---|
| Acrylonitrile (AN) | 20 | parts |
| Styrene (ST) | 70 | parts |
| N-Phenylmaleimide (P-MI) | 10 | parts |
| Azobisisobutyronitrile (AIBN) | 0.1 | part |
| tert-Butyl perbenzoate (t-BPB) | 0.1 | part |
| tert-Dodecyl mercaptan (t-DM) | 0.3 | part |
| Gafac® GB520 [of formula (I) in which R = lauryl, A = sodium, m = 2, n = 6] | 0.003 | part |

Aqueous phase:

| | | |
|---|---|---|
| Distilled water | 100 | parts |
| Calcium tertiary phosphate (TCP) | 0.5 | part |

Specifically, after the 3-liter autoclave was thoroughly purged with $N_2$, the aqueous-phase components were first charged thereinto. Separately, the monomer-phase components were mixed well to form a solution. This solution was charged into the autoclave and stirring was started. The internal temperature was raised to 80°C and held at that level for 3 hours to effect the reaction. Thereafter, the internal temperature was raised to 120°C and the polymerization was continued for an additional 2 hours. Then, the autoclave were observed after completion of the polymerization, almost no polymer was found to be attached thereto.

The resulting bead polymer was dehydrated with a centrifugal dehydrator, treated with 1N dilute sulfuric acid to dissolve and remove the TCP, washed well and then dried in a hot-air dryer at 90°C for 48 hours to obtain spherical beads. The average diameter of the beads was 180 μm. The glass transition temperature (Tg) of the copolymer thus obtained was 125°C.

Then, the above copolymer was pelletized at 250°C by means of a 40 mmø extruder. Part of the pellets thus obtained were used to evaluate the thermal decomposability of the copolymer. Moreover, a flat plate having a size of 50 x 80 x $3^t$ mm was formed of these pellets by means of a 1-ounce vertical injection molding machine and used to evaluate its thermal discoloration. The results of evaluation are shown in Table 1.

Preparation of graft copolymer [B]

The following materials were charged into a 5-liter reactor made of glass.

| | |
|---|---|
| Polybutadiene latex | 50 parts (as solid content) |
| Ethylenediaminetetraacetic acid disodium salt | 0.01 part |
| Ferrous sulfate | 0.003 part |

| | | |
|---|---|---|
| Sulfosuccinate | 0.3 | part |
| Distilled water | 150 | parts |
| Potassium rosinate | 1 | part |
| Potassium hydroxide | 0.01 | part |

The reactor was purged with $N_2$ and then heated to 65°C. Thereafter, a mixture of 15 parts of acrylonitrile, 35 parts of styrene, 0.3 part of cumene hydroperoxide (CHP) and 0.3 part of tert-dodecyl mercaptan (t-DM) was added dropwise to the reactor over a period of 3 hours. After completion of the addition, an additional 0.1 part of CHP was supplemented. Then, the reaction mixture was heated to 75°C and held at that temperature for 2 hours to complete the polymerization. To the resulting ABS-grafted latex was added 0.1 part of Antage W-400 (trade name, an antioxidant commercially available from Sumitomo Chemical Co., Ltd.). The latex was coagulated with 1% dilute sulfuric acid, dehydrated with a centrifugal dehydrator, washed and then dried to obtain a white powder.

Preparation of a resin composition

The copolymers [A] and [B] prepared according to the above-described procedures were mixed in a proportion of 55 parts to 45 parts, and 0.3 part of magnesium stearate, 0.1 part of tris(nonylphenyl) phosphite and 0.2 part of Antage W-400 were added

thereto. This mixture was intimately blended in a tumbler and then pelletized at 250°C by means of a 40 mmø extruder. Flat plates having a size of 80 x 50 x $3^t$ mm were formed of the resulting pellets by means of a 1-ounce vertical injection molding machine and used to evaluate the thermal discoloration, thermal decomposability and other properties of the resin composition. The results of evaluation are shown in Table 2.

Example 2

Preparation of maleimide copolymer [A]

The following materials were charged into a 3-liter autoclave.

Monomer phase:

| | | |
|---|---|---|
| AN | 16 | parts |
| ST | 64 | parts |
| P-MI | 20 | parts |
| AIBN | 0.1 | part |
| t-BPB | 0.1 | part |
| t-DM | 0.3 | part |
| Gafac® GB520 | 0.003 | part |

Aqueous phase:

| | | |
|---|---|---|
| Distilled water | 100 | parts |
| TCP | 0.5 | part |

The above materials were polymerized in the same manner as described in Example 1. The beads thus obtained were slightly yellowish, spherical particles and their average diameter was 200 μm. A very small amount of polymer was found to be attached to the inner walls of the autoclave. The Tg of the copolymer was 135°C.

Then, the above beads were used to evaluate the copolymer in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties thereof were evaluated. The results of evaluation are shown in Table 2.

Example 3

Preparation of maleimide copolymer [A]

Polymerization was carried out in the same manner as described in Example 1, except that Gafac® GB520 was replaced by Gafac® RE610 [of formula (I) in which R = nonylphenyl, A = hydrogen, m = 2 and n = 6].

The beads thus obtained were spherical particles and had an even particle size distribution with an average diameter of 190 μm. The Tg of the copolymer was 124°C. After completion of the polymerization, a very small amount of polymer was found to be attached to the inner walls of the autoclave.

Then, the above beads were used to evaluate the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties thereof were evaluated. The results of evaluation are shown in Table 2.

Example 4

Preparation of maleimide copolymer [A]

The following materials were charged into a 3-liter autoclave.

Monomer phase:

| | |
|---|---|
| AN | 12.5 parts |
| ST | 57.5 parts |

| | | |
|---|---|---|
| P-MI | 30 | parts |
| AIBN | 0.1 | part |
| t-BPB | 0.1 | part |
| Gafac® GB520 | 0.02 | part |

Aqueous phase:

| | | |
|---|---|---|
| Distilled water | 100 | parts |
| TCP | 0.5 | part |

Specifically, the aqueous-phase components were first charged into the 3-liter autoclave, which was thoroughly purged with $N_2$. Then, the monomer-phase components were charged thereinto and stirring was started. The internal temperature was raised to 80°C and held at that level for 3 hours. Thereafter, the internal temperature was raised to 130°C and held at that level for 2 hours. The resulting beads were dehydrated with a centrifugal dehydrator and treated with 1N dilute sulfuric acid to dissolve the TCP thoroughly. After dehydration and water washing were repeated twice, they were dried in a hot-air dryer at 100°C aor 24 hours. The beads thus obtained were perfectly spherical particles and had an average diameter of 250 μm. The Tg of the copolymer was 144°C. Moreover, a very small amount of polymer was found to be attached to the inner walls of the autoclave.

Then, the above beads were used to evaluate

the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties thereof were evaluated. The results of evaluation are shown in Table 2.

Example 5

Preparation of maleimide copolymer [A]

The following materials were charged into a 3-liter autoclave.

Monomer phase:

| | | |
|---|---|---|
| AN | 5 | parts |
| ST | 55 | parts |
| Methyl methacrylate (MMA) | 20 | parts |
| P-MI | 20 | parts |
| AIBN | 0.1 | part |
| t-BPB | 0.1 | part |
| t-DM | 0.3 | part |
| Gafac® RE610 | 0.01 | part |

Aqueous phase:

| | | |
|---|---|---|
| Distilled water | 100 | parts |
| TCP | 0.5 | part |

The above materials were polymerized in the same manner as described in Example 1. After completion of the polymerization, a very small amount of polymer was found to be attached to the inner walls of the autoclave. After the resulting beads were thoroughly washed with 1N dilute sulfuric acid, dehydration and water washing were repeated twice. Then, they were dried at 100°C for 24 hours. The beads thus obtained were perfectly spherical particles and had an average diameter of 255 μm. The Tg of the copolymer was 140°C.

Then, the above beads were used to evaluate the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties thereof were evaluated. The results of evaluation are shown in Table 2.

Example 6

Preparation of maleimide copolymer [A]

The following materials were charged into a 3-liter autoclave.

Monomer phase:

| | | |
|---|---|---|
| AN | 20 | parts |
| ST | 20 | parts |
| α-Methylstyrene (αMS) | 35 | parts |
| P-MI | 25 | parts |
| AIBN | 0.1 | part |
| t-BPB | 0.2 | part |
| t-DM | 0.3 | part |
| Gafac® GB520 | 0.01 | part |

Aqueous phase:

| | | |
|---|---|---|
| Distilled water | 100 | parts |
| TCP | 0.5 | part |

The above materials were polymerized in the same manner as described in Example 1. After completion of the polymerization, a very small amount of polymer was found to be attached to the inner walls of the autoclave. After the resulting beads were thoroughly washed with 1N dilute sulfuric acid, dehydration and water washing were repeated twice. Then, they were dried at 100°C for 24 hours. The beads thus obtained were perfectly spherical particles

and had an average diameter of 220 μm. The Tg of the copolymer was 150°C.

Then, the above beads were used to evaluate the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties thereof were evaluated. The results of evaluation are shown in Table 2.

Comparative Example 1

Preparation of a maleimide copolymer

The following materials were charged into a 3-liter autoclave.

Monomer phase:

| | | |
|---|---|---|
| AN | 20 | parts |
| ST | 70 | parts |
| P-MI | 10 | parts |
| AIBN | 0.1 | part |
| t-BPB | 0.1 | part |
| t-DM | 0.3 | part |

Aqueous phase:

| | | |
|---|---|---|
| Distilled water | 120 | parts |
| Polyvinyl alcohol (PVA) [having a degree of polymerization of 1500] | 0.5 | part |

The above materials were polymerized in the autoclave in the same manner as described in Example 1. Then, beads were obtained by dehydration, water washing and drying. The beads thus obtained were not uniform in diameter (with an average diameter of 350 μm) and included a considerable number of bubble-containing particles and abnormally large particles, suggesting that the suspension polymerization system had been unstable. Moreover, a large amount of polymer was found to be attached to the inner walls of the autoclave. The Tg of the copolymer thus obtained was 124°C.

Then, the above beads were used to evaluate the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties

thereof were evaluated. The results of evaluation are shown in Table 2.

Comparative Example 2

Preparation of a maleimide copolymer

Polymerization was carried out in the same manner as described in Comparative Example 1, except that the PVA used as the suspension dispersant was replaced by 0.5 part of a partial saponification product (or KOH-treated product) of PMMA (PMMA-derived dispersant). The beads thus obtained were accompanied by a large amount of floating polymer and had an average diameter of as large as 430 μm, suggesting that the polymerization system had been unstable. Moreover, a large amount of polymer was found to be attached to the inner walls of the autoclave. The Tg of the copolymer thus obtained was 125°C.

Then, the above beads were used to evaluate the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same

manner as described in Example 1, and various properties thereof were evaluated. The results of evaluation are shown in Table 2.

Comparative Example 3

Preparation of a maleimide copolymer

Polymerization was carried out in the same manner as described in Example 2, except that 0.01 part of potassium oleate, an anionic surface-active agent, was used in place of 0.01 part of Gafac® GB-520. After completion of the polymerization, a large amount of copolymer was found to be attached as a film to the inner walls of the autoclave. The beads thus obtained had a wide size distribution with an average diameter of 350 μm and included many larger particles. The Tg of this copolymer was 136°C.

Then, the above beads were used to evaluate the copolymer itself in the same manner as described in Example 1. The results of evaluation are shown in Table 1.

Preparation of a resin composition

A blend of the beads obtained in the above-described manner and the graft copolymer obtained in Example 1 was pelletized and molded in the same manner as described in Example 1, and various properties

thereof were evaluated. The results of evaluation are shown in Table 1.

Comparative Example 4

Preparation of a maleimide copolymer

The following materials were charged into a 5-liter reactor made of glass.

| | | |
|---|---|---|
| Distilled water | 200 | parts |
| Sodium lauryl sulfate | 3 | parts |
| Acid sodium sulfite | 1 | part |
| Potassium persulfate | 0.5 | part |

After the mixture was heated to 60°C, a solution composed of 20 parts of AN, 70 parts of ST and 10 parts of P-MI was added dropwise thereto over a period of 3 hours. After completion of the addition, an additional 0.1 part of potassium persulfate was supplemented. Then, the reaction system was heated to 70°C and held at that temperature for 2 hours to complete the polymerization. The monomer conversion was 93%.

The resulting latex was coagulated with magnesium sulfate, washed, dehydrated and dried to obtain a white copolymer powder. The Tg of this copolymer was 135°C.

Then, the above white copolymer powder was used to evaluate the copolymer itself in the same manner

as described in Example 1. The results of evaluation are shown in Table 1.

Preparation of a resin composition

A blend of the copolymer powder obtained in the above-described manner and the graft copolymer obtained in Example 1 was pelletized and molded in the same manner as described in Example 1, and various properties thereof were evaluated. The results of evaluation are shown in Table 2.

Table 1

| | Monomers charged (parts) | | | | | Suspension dispersants (parts) | | | Dispersing agents (parts) | |
|---|---|---|---|---|---|---|---|---|---|---|
| | AN | ST | MMA | P-MI | αMS | TCP | PVA | PMMA-derived | Phosphoric ester type surfactant | Potassium oleate |
| Example 1 | 20 | 70 | - | 10 | - | 0.5 | - | - | GB-520 0.003 | - |
| " 2 | 16 | 64 | - | 20 | - | 0.5 | - | - | GB-520 0.01 | - |
| " 3 | 20 | 70 | - | 10 | - | 0.5 | - | - | RE-610 0.003 | - |
| " 4 | 12.5 | 57.5 | - | 30 | - | 0.5 | - | - | GB-520 0.02 | - |
| " 5 | 5 | 55 | 20 | 20 | - | 0.5 | - | - | RE-610 0.01 | - |
| " 6 | 20 | 20 | - | 25 | 35 | 0.5 | - | - | GB-520 0.02 | - |
| Comparative Example 1 | 20 | 70 | - | 10 | - | - | 0.5 | - | - | - |
| " 2 | 20 | 70 | - | 10 | - | - | - | 0.5 | - | - |
| " 3 | 16 | 64 | - | 20 | - | 0.5 | - | - | - | 0.01 |
| " 4 | 20 | 70 | - | 10 | - | - | - | - | - | - |

- to be cont'd -

* Indications of adhesion to the polymerization vessel

○ : Very little polymer was found to be attached to the inner walls of the polymerization vessel.

X : A large amount of polymer was found to be attached to the inner walls of the polymerization vessel.

Table 1 (Cont'd)

| Adhesion to polymerization vessel* | Thermal decomposability (°C) | Thermal discoloration | Tg (°C) |
|---|---|---|---|
| ○ | 380 | ○ | 125 |
| ○ | 371 | ○ | 135 |
| ○ | 380 | ○ | 124 |
| ○ | 365 | ○ | 144 |
| ○ | 360 | ○ | 140 |
| ○ | 360 | ○ | 150 |
| X | 351 | Δ | 124 |
| X | 352 | Δ | 125 |
| X | 351 | ○ | 136 |
| ○ | 340 | X | 135 |

Table 2

| | Thermal decompos-ability (290°C) | Thermal discolor-ation (280°C) [YI value] | Notched Izod impact strength (kg·cm/cm$^2$) [ASTM D-256] | Melt flow index (g/10 min) [ASTM D-1238] | Rockwell hardness (R scale) [ASTM D-785] | Vicat softening temperature (°C) [ISO-R306] |
|---|---|---|---|---|---|---|
| Example 1 | ○ | 31 | 16.4 | 11 | 102 | 108 |
| " 2 | ○ | 30 | 9 | 7.2 | 103 | 112 |
| " 3 | ○ | 29 | 16.2 | 12 | 102 | 107 |
| " 4 | ○ | 33 | 5 | 4 | 105 | 122 |
| " 5 | ○ | 28 | 4 | 6.2 | 104 | 115 |
| " 6 | ○ | 30 | 4 | 3 | 105 | 125 |
| Comparative Example 1 | X | 44 | 15.5 | 12 | 102 | 105 |
| " 2 | X | 41 | 16 | 11 | 101 | 104 |
| " 3 | Δ | 38 | 8 | 7 | 104 | 113 |
| " 4 | XX | 51 | 17 | 7.4 | 103 | 113 |

Examples 7 to 12

Resin composition were prepared by blending the graft copolymer obtained in Example 1 with each of the maleimide copolymers obtained in Examples 1, 2 and 4 in each of the proportions shown in Table 3. These resin compositions were pelletized and molded in the same manner as described in Example 1, and various properties thereof were evaluated. The results of evaluation are shown in Table 3.

Table 3

| | Formulation of resin composition (weight ratio) | Thermal decomposability (290°C) | Thermal discoloration (280°C) [YI value] | Notched Izod impact strength (kg·cm/cm$^2$) [ASTM D-256] |
|---|---|---|---|---|
| Example 7 | Graft copolymer/maleimide copolymer of Example 1 = 50/50 | ○ | 33 | 19.5 |
| " 8 | Graft copolymer/maleimide copolymer of Example 1 = 40/60 | ○ | 29 | 12 |
| " 9 | Graft copolymer/maleimide copolymer of Example 2 = 50/50 | ○ | 31 | 11 |
| " 10 | Graft copolymer/maleimide copolymer of Example 2 = 40/60 | ○ | 28 | 6 |
| " 11 | Graft copolymer/maleimide copolymer of Example 4 = 50/50 | ○ | 35 | 6.7 |
| " 12 | Graft copolymer/maleimide copolymer of Example 4 = 40/60 | ○ | 31 | 4 |

- to be cont'd -

Table 3 (Cont'd)

| Melt flow index (g/10 min) [ASTM D-1238] | Rockwell hardness (R scale) [ASTM D-785] | Vicat softening temperature (°C) [ISO-R306] |
|---|---|---|
| 9.2 | 100 | 102 |
| 14 | 106 | 114 |
| 6 | 101 | 108 |
| 9.1 | 107 | 116 |
| 3 | 102 | 118 |
| 5.2 | 108 | 128 |

The suspension polymerization process of the present invention brings about excellent stability of the polymerization system and causes almost no polymer to adhere to the inner walls of the polymerization vessel. Moreover, the process of the present invention can provide a maleimide copolymer which does not undergo discoloration or thermal decomposition during high-temperature molding. Furthermore, the resin composition of the present invention, formed by blending this maleimide copolymer with a specific rubber-modified graft copolymer, has not only excellent thermal stability and resistance to discoloration during high-temperature molding, but also very excellent thermal resistance and impact resistance.

CLAIMS

1. A process for the preparation of maleimide copolymers by suspension polymerization of 50 to 95% by weight of at least one monomer selected from the group consisting of aromatic vinyl monomers, vinyl cyanide monomers and methyl methacrylate monomer, 5 to 50% by weight of a maleimide monomer, and 0 to 30% by weight of a monomer copolymerizable therewith, provided that the total amount of said monomers is 100% by weight, said process being characterized by carrying out said suspension polymerization while using a calcium phosphate dispersant as the suspension dispersant and while allowing a phosphoric ester type nonionic surface-active agent of the general formula

$$[RO(CH_2CH_2O)_n]_m\overset{\displaystyle O}{\overset{\|}{P}}(OA)_{3-m} \qquad (I)$$

where R is an alkyl or aralkyl group of 8 to 30 carbon atoms, A is a hydrogen atom or a metal capable of forming a water-soluble salt, m is an integer of 1 to 3, and n is an integer of 5 to 50, to be dissolved in said monomers in an amount of 0.0001 to 0.5 part by weight per 100 parts by weight of the mixture of said monomers.

2. A process as claimed in claim 1 wherein said maleimide monomer is at least one member selected from the group consisting of maleimide, N-methylmaleimide, N-ethylmaleimide, N-phenylmaleimide, N-halophenylmaleimides, N-alkylphenylmaleimides and N-cyclohexylmaleimide.

3. A process as claimed in claim 1 wherein said calcium phosphate dispersant is at least one member selected from the group consisting of calcium tertiary phosphate, calcium secondary phosphate, calcium hydrogen phosphate and hydroxyapatite.

4. A thermoplastic resin composition comprising

[A] 40 to 90% by weight of a maleimide copolymer prepared from 50 to 95% by weight of at least one monomer selected from the group consisting of aromatic vinyl monomers, vinyl cyanide monomers and methyl methacrylate monomer, 5 to 50% by weight of a maleimide monomer, and 0 to 30% by weight of a monomer copolymerizable therewith, provided that the total amount of said monomers is 100% by weight, said copolymer having been obtained by subjecting said monomers to suspension polymerization while using a calcium phosphate dispersant as the suspension dispersant and while allowing a

phosphoric ester type nonionic surface-active agent of the general formula

$$[RO(CH_2CH_2O)_n]_m \underset{\underset{O}{\|}}{P}(OA)_{3-m} \qquad (I)$$

where R is an alkyl or aralkyl group of 8 to 30 carbon atoms, A is a hydrogen atom or a metal capable of forming a water-soluble salt, m is an integer of 1 to 3, and n is an integer of 5 to 50, to be dissolved in said monomers in an amount of 0.0001 to 0.5 part by weight per 100 parts by weight of the mixture of said monomers; and

[B] 10 to 60% by weight of a graft copolymer formed by subjecting at least one monomer selected from the group consisting of aromatic vinyl monomers, vinyl cyanide monomers and methyl methacrylate monomer to graft polymerization on a rubber polymer;

the total amount of said copolymers [A] and [B] being 100% by weight.

5. A thermoplastic resin composition as claimed in claim 4 wherein said maleimide monomer is at least one member selected from the group consisting of maleimide, N-methylmaleimide, N-ethylmaleimide, N-phenylmaleimide, N-halophenylmaleimides, N-alkylphenylmaleimides and N-cyclohexylmaleimide.

6. A thermoplastic resin composition as claimed in claim 4 wherein said calcium phosphate dispersant is at least one member selected from the group consisting of calcium tertiary phosphate, calcium secondary phosphate, calcium hydrogen phosphate and hydroxyapatite.

7. A thermoplastic resin composition as claimed in claim 4 wherein said rubber polymer is at least one member selected from the group consisting of diene rubbers composed mainly of a diene monomer, acrylic rubbers composed mainly of an acrylic ester, and ethylene-propylene-diene rubber.

8. A thermoplastic resin composition as claimed in claim 4 wherein said graft copolymer [B] is formed by subjecting 80 to 30 parts by weight of at least one monomer selected from the group consisting of aromatic vinyl monomers, vinyl cyanide monomers and methyl methacrylate monomer to graft polymerization on 20 to 70 parts by weight of a rubber polymer.

# INTERNATIONAL SEARCH REPORT

0208790

International Application No. PCT/JP86/00017

**I. CLASSIFICATION OF SUBJECT MATTER** (if several classification symbols apply, indicate all)[3]

According to International Patent Classification (IPC) or to both National Classification and IPC

Int.Cl[4] C08F2/18, C08F212/04, C08L33/14, C08L35/06, C08L51/04

**II. FIELDS SEARCHED**

Minimum Documentation Searched[4]

| Classification System | Classification Symbols |
|---|---|
| IPC | C08F2/18, C08F212/04, 06, 08, C08F222/40, C08L33/14, C08L35/06 C08L51/04 |

Documentation Searched other than Minimum Documentation to the Extent that such Documents are Included in the Fields Searched[5]

**III. DOCUMENTS CONSIDERED TO BE RELEVANT**[14]

| Category* | Citation of Document,[16] with indication, where appropriate, of the relevant passages[17] | Relevant to Claim No.[18] |
|---|---|---|
| A | JP, A, 49-83785 (Tokuyama Sekisui Kogyo Kabushiki Kaisha) 12 August 1974 (12. 08. 74) (Family: none) | 1-3 |
| Y | JP, A, 54-95689 (Mitsubishi Rayon Co., Ltd.) 28 July 1979 (28. 07. 79) (Family: none) | 1-3 |
| Y | JP, A, 57-125242 (Denki Kagaku Kogyo Kabushiki Kaisha) 4 August 1982 (04. 08. 82) & US, A, 4,404,322 | 4-8 |
| Y | JP, A, 57-167341 (Asahi-Dow Limited) 15 October 1982 (15. 10. 82) (Family: none) | 4-8 |
| Y | JP, A, 58-129043 (Toray Industries, Inc.) 1 August 1983 (01. 08. 83) (Family: none) | 4-8 |
| Y | JP, A, 58-206657 (Denki Kagaku Kogyo Kabushiki Kaisha) 1 December 1983 (01. 12. 83) (Family: none) | 4-8 |

* Special categories of cited documents:[15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search[2] | Date of Mailing of this International Search Report[2] |
|---|---|
| March 28, 1986 (28. 03. 86) | April 14, 1986 (14. 04. 86) |
| International Searching Authority[1] | Signature of Authorized Officer[20] |
| Japanese Patent Office | |

Form PCT/ISA/210 (second sheet) (October 1981)

**FURTHER INFORMATION CONTINUED FROM THE SECOND SHEET**

| | | |
|---|---|---|
| Y | JP, A, 59-184243 (Toray Industries, Inc.) 19 October 1984 (19. 10. 84) | 4-8 |

**V. ☐ OBSERVATIONS WHERE CERTAIN CLAIMS WERE FOUND UNSEARCHABLE [10]**

This international search report has not been established in respect of certain claims under Article 17(2) (a) for the following reasons:

1. ☐ Claim numbers............, because they relate to subject matter [12] not required to be searched by this Authority, namely:

2. ☐ Claim numbers............, because they relate to parts of the international application that do not comply with the prescribed requirements to such an extent that no meaningful international search can be carried out [13], specifically:

**VI. ☐ OBSERVATIONS WHERE UNITY OF INVENTION IS LACKING [11]**

This International Searching Authority found multiple inventions in this international application as follows:

1. ☐ As all required additional search fees were timely paid by the applicant, this international search report covers all searchable claims of the international application.
2. ☐ As only some of the required additional search fees were timely paid by the applicant, this international search report covers only those claims of the international application for which fees were paid, specifically claims:
3. ☐ No required additional search fees were timely paid by the applicant. Consequently, this international search report is restricted to the invention first mentioned in the claims; it is covered by claim numbers:
4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.